# EUROPÄISCHE PATENTSCHRIFT

(11) **EP 1 234 160 B1**
(45) Veröffentlichungstag und Bekanntmachung des Hinweises auf die Patenterteilung: **08.03.2006**
(21) Anmeldenummer: 00974522.5
(22) Anmeldetag: 11.11.2000
(51) Int. Cl.: G01D 5/347, G01D 5/26

(54) **MASSVERKÖRPERUNG UND POSITIONSMESSEINRICHTUNG MIT EINER DERARTIGEN MASSVERKÖRPERUNG**
MATERIAL MEASURE AND POSITION MEASURING DEVICE COMPRISING SUCH A MATERIAL MEASURE
MESURE MATERIALISEE ET DISPOSITIF DE MESURE DE LA POSITION COMPORTANT UNE TELLE MESURE MATERIALISEE

(30) Priorität: 19.11.1999 DE 19955618
(43) Veröffentlichungstag der Anmeldung: 28.08.2002
(73) Patentinhaber: Dr. Johannes Heidenhain GmbH, 83292 Traunreut (DE)
(72) Erfinder: WEIDMANN, Josef, 83308 Trostberg (DE); SPECKBACHER, Peter, 84558 Kirchweidach (DE)
(86) Internationale Anmeldenummer: PCT/EP2000/011168
(87) Internationale Veröffentlichungsnummer: WO 2001/038829

(56) Entgegenhaltungen:
- DE-A- 3 305 129
- US-A- 4 661 697

## Beschreibung

Die vorliegende Erfindung betrifft eine Maßverkörperung sowie eine Positionsmeßeinrichtung mit einer derartigen Maßverkörperung.

Optische Auflicht-Positionsmeßeinrichtungen umfassen üblicherweise eine Maßverkörperung sowie eine relativ hierzu bewegliche Abtasteinheit. Auf Seiten der Abtasteinheit ist in der Regel eine Lichtquelle angeordnet, die ein Lichtbündel in Richtung der Maßverkörperung emittiert. Von dort erfolgt eine Rückreflexion in Richtung der Abtasteinheit, wo das verschiebungsabhängig modulierte Lichtbündel ggf. durch ein oder mehrere Abtastteilungs-Strukturen tritt und schließlich von einer optoelektronischen Detektoranordnung erfaßt wird. Die derart erzeugten, verschiebungsabhängig modulierten Signale werden über eine nachgeordnete Auswerteeinheit weiterverarbeitet.

Bekannte Maßverkörperungen derartiger Systeme bestehen aus einem Substratmaterial, auf dem alternierend Teilbereiche mit unterschiedlichen optischen Eigenschaften angeordnet sind; im Auflicht-Fall wechseln sich hierbei erste und zweite Teilbereiche mit unterschiedlichen Reflexionseigenschaften ab (siehe US-A-4 661 697). Die Anordnung der verschiedenen Teilbereiche erstreckt sich im Fall einer Inkrementalteilung in der Meßrichtung. Beispielsweise kann auf einem Glas-Substrat vorgesehen werden, Teilbereiche mit hoher und geringer Reflektivität auszubilden. Alternativ wird als Substratmaterial auch Stahl verwendet, auf dem dann ebenfalls Teilbereiche mit hoher und geringer Reflektivität ausgebildet werden. Die Teilbereiche hoher Reflektivität können aus Gold bestehen, während in den geringer reflektierenden Teilbereichen die Stahloberfläche mattgeätzt wird, so daß das dort auftreffende Licht absorbiert oder diffus reflektiert wird.

Probleme ergeben sich bei den oben diskutierten Positionsmeßeinrichtungen durch den Einfluß von Streulicht, d.h. durch Strahlung, die von der Lichtquelle direkt auf die Detektorelemente gelangt, ohne daß die Strahlung von der jeweiligen Maßverkörperung moduliert wurde. Der Modulationsgrad der Abtastsignale wird durch derartiges Streulicht verringert.

Derartige Probleme lassen sich durch den Einsatz einer Maßverkörperung mit photolumineszierenden Teilbereichen zumindest teilweise umgehen, wie dies etwa in der DE 1 227 246 bereits vorgeschlagen wurde. Hierbei gelangt in erster Linie Strahlung mit der jeweiligen Photolumineszenz-Wellenlänge auf die Detektorelemente; die Anregungs-Wellenlänge unterscheidet sich hingegen von dieser Strahlung und beeinflußt die Positionsbestimmung nicht weiter. Im Hinblick auf die konkrete Ausbildung der Maßverkörperung, inbesondere die Ausbildung der photolumineszierenden Teilbereiche finden sich in dieser Druckschrift jedoch keine weiteren Hinweise. Desweiteren ist noch nicht zuverlässig sichergestellt, daß kein Streulicht der Lichtquelle auf die Detektorelemente gelangt.

Aufgabe der vorliegenden Erfindung ist es daher, eine geeignete Ausbildung einer photolumineszierenden Maßverkörperung für eine Positionsmeßeinrichtung anzugeben.

Desweiteren soll eine Positionsmeßeinrichtung angegeben werden, bei der die diskutierten Streulichtprobleme minimiert werden.
Die erste Teilaufgabe wird gelöst durch eine Maßverkörperung mit den Merkmalen des Anspruches 1.

Vorteilhafte Ausführungsformen der erfindungsgemäßen Maßverkörperung ergeben sich aus den Merkmalen der von Anspruch 1 abhängigen Patentansprüche.

Die zweite Teilaufgabe wird durch eine Positionsmeßeinrichtung mit den Merkmalen des Anspruches 10 gelöst.

Vorteilhafte Ausführungsformen der erfindungsgemäßen Positionsmeßeinrichtung ergeben sich aus den Merkmalen der von Anspruch 10 abhängigen Patentansprüche.

Erfindungsgemäß wird nunmehr eine Maßverkörperung eingesetzt, die aus einem Trägersubstrat besteht, das mindestens eine Spur mit alternierenden ersten und zweiten Teilbereichen aufweist. Die ersten Teilbereiche sind hierbei porös und photolumineszierend ausgebildet; die zweiten Teilbereiche sind nicht-photolumineszierend ausgebildet. Im Fall der Anregung durch Strahlung einer geeigneten Wellenlänge emittieren die ersten Teilbereiche Strahlung mit einer Wellenlänge, die sich von der Anregungswellenlänge unterscheidet. Nur die von den ersten Teilbereichen emittierte Strahlung gelangt auf die Detektorelemente der jeweiligen Positionsmeßeinrichtung, was z.B. durch geeignete Filterelemente im Abtaststrahlengang gewährleistet werden kann. Dadurch ist sichergestelllt, daß nur Strahlung von der erfindungsgemäßen Maßverkörperung auf die Detektorelemente gelangt, d.h. die oben erwähnten Streulichtprobleme sind damit umgangen.

In Bezug auf die Ausbildung der ersten, porösen und photolumineszierenden Teilbereiche gibt es verschiedene Möglichkeiten. So können diese Teilbereiche im Fall der Verwendung von Silizium als Trägersubstratmaterial etwa als poröses Silizium ausgebildet werden, das bekannte Photolumineszenzeigenschaften aufweist. Alternativ hierzu können die jeweiligen porösen Teilbereiche im Trägersubstratmaterial aber auch mit einem geeigneten Lumineszenz-Farbstoff versehen werden.

Die photolumineszierenden Teilbereiche wirken in der erfindungsgemäßen Maßverkörperung bzw. in der erfindungsgemäßen Positionsmeßeinrichtung somit als diskrete, inkohärente und diffuse Lichtquellen, die von einer geeigneten Lichtquelle in der Abtasteinheit angeregt werden.

Neben der erwähnten Streulicht-Minimierung ergeben sich im Fall der Verwendung von Silizium als Trägersubstratmaterial weitere Vorteile. So ist hierbei die hohe mechanische Beständigkeit des Silizium-Trägersubstrates aufzuführen. Das Silizium-Trägersubstrat ist desweiteren strukturell stabil und verändert sich nicht mehr, d.h. es resultieren keine unerwünschten Diffusionsprozesse. Ferner besitzt Silizium ein definiertes thermisches Ausdehnungsverhalten, was insbesondere für Hochpräzisionsanwendungen in der Halbleiterindustrie von Bedeutung ist. Außerdem ist aufzuführen, daß Silizium als Substratmaterial preisgünstig in definiertem Zustand verfügbar ist, d.h. in einer stabilen Qualität bzgl. Verunreinigungen und Oberflächengüte. Desweiteren sei in diesem Zusammenhang die relativ problemlose Prozessierbarkeit dieses Materiales erwähnt.

Auch die Erzeugung der Teilbereiche mit photolumineszierenden Eigenschaften erweist sich im Fall der Verwendung von Silizium-Trägersubstraten als verfahrenstechnisch nicht aufwendig, wenn diese als poröse Silizium-Bereiche ausgebildet werden.

Desweiteren ist es natürlich möglich, die erfindungsgemäße Maßverkörperung in linearen Meßanordnungen ebenso einzusetzen wie in rotatorischen Meßanordnungen oder zweidimensionalen Meßanordnungen etc..

Es existieren desweiteren eine Reihe von Varianten, wie die erfindungsgemäße Positionsmeßeinrichtung ausgelegt werden kann, beispielsweise als Zweigitter-Geber, Dreigitter-Geber etc..

Weitere Vorteile sowie Einzelheiten der vorliegenden Erfindung ergeben sich aus der nachfolgenden Beschreibung der beiliegenden Zeichnungen.

Dabei zeigt
- Figur 1: eine schematische Darstellung des Abtaststrahlenganges eines Ausführungsbeispieles der erfindungsgemäßen Positionsmeßeinrichtung in Verbindung mit einem Ausführungsbeispiel der erfindungsgemäßen Maßverkörperung;
- Figur 2: eine Draufsicht auf die Maßverkörperung aus Figur 1;
- Figur 3: eine Darstellung des Lumineszenz-Spektrums von porösem Silzium;
- Figur 4a - 4e: jeweils verschiedene Verfahrensschritte bei der Herstellung eines Ausführungsbeispieles der erfindungsgemäßen Maßverkörperung.

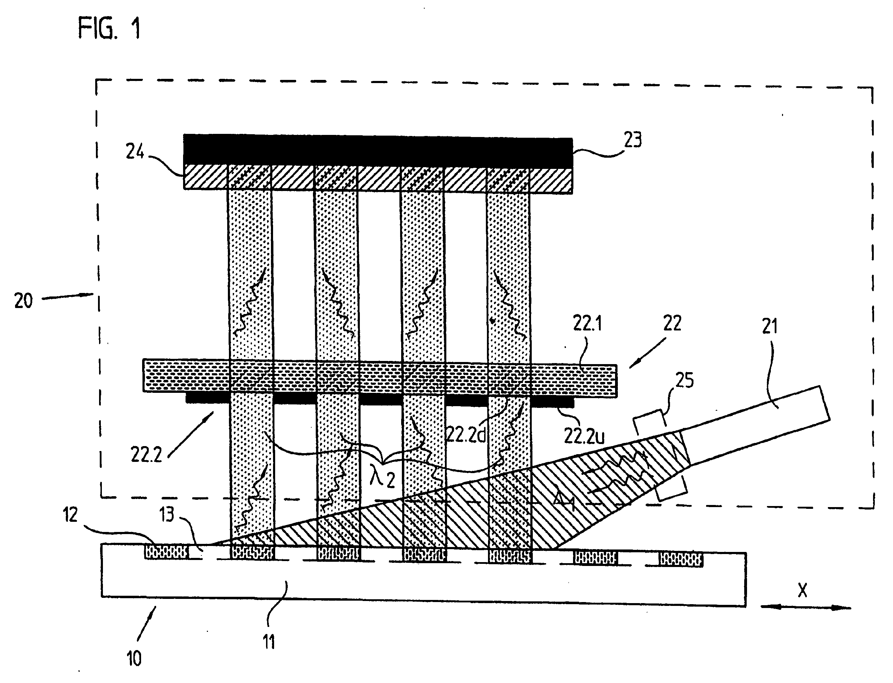

Eine mögliche Ausführungsform der erfindungsgemäßen Positionsmeßeinrichtung und der darin eingesetzten erfindungsgemäßen Maßverkörperung sei nachfolgend anhand der Figuren 1-3 erläutert. Figur 1 zeigt hierbei in schematisierter Form den Abtaststrahlengang in der Positionsrneßeinrichtung, die als Auflicht-System ausgebildet ist.

Die Positionsmeßeinrichtung umfaßt in bekannter Weise eine Maßverkörperung 10 sowie eine relativ hierzu in Meßrichtung x bewegliche Abtasteinheit 20. Im Ausführungsbeispiel der Figur 1 ist eine lineare Meßanordnung dargestellt, selbstverständlich können auch rotatorische Meßanordnungen auf Grundlage der vorliegenden Erfindung realisiert werden. Die erfindungsgemäße Positionsmeßeinrichtung bzw. die erfindungsgemäße Maßverkörperung kann etwa zur Bestimmung der Position zweier zueinander beweglicher Maschinenteile eingesetzt werden.

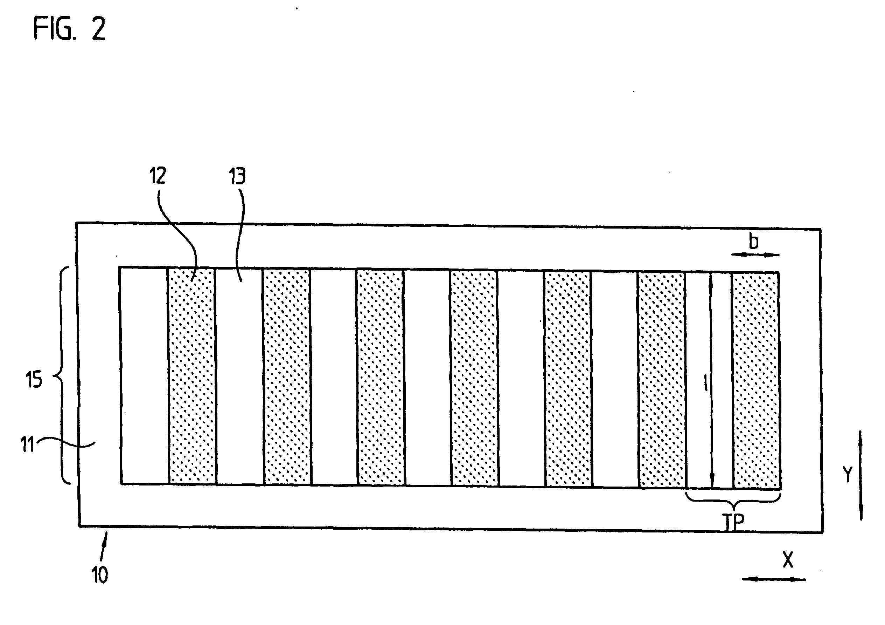

Die Maßverkörperung 10 besteht erfindungsgemäß aus einem Trägersubstrat 11, das sich in diesem Beispiel einer linearen Meßanordnung in Meßrichtung x erstreckt. Auf der Oberseite des Trägersubstrates 11, d.h. auf der der Abtasteinheit 20 zugewandeten Seite, ist eine Spur 15 mit einer Inkrementalteilung angeordnet, die von der Abtasteinheit 20 zur Erzeugung positionsabhängiger Inkremental-Signale abgetastet wird. Eine Draufsicht auf die Maßverkörperung 10 mit der Spur 15 ist in Figur 2 dargestellt.

Die Spur 15 mit der Inkrementalteilung besteht aus alternierend angeordneten Teilbereichen 12, 13, die unterschiedliche optische Eigenschaften aufweisen. Die ersten Teilbereiche 12 sind erfindungsgemäß als poröse und photolumineszierende Teilbereiche ausgebildet, die zweiten Teilbereiche 13 sind hingegen nicht-photolumineszierend ausgebildet und bestehen beispielsweise aus dem unveränderten Material des jeweiligen Trägersubstrates 11. Wie insbesondere aus der Draufsicht in Figur 2 ersichtlich ist, weisen die Teilbereiche 12, 13 der Spur 15 mit der Inkrementalteilung jeweils eine schmale, fast strichähnliche Rechteckform auf. Die Rechtecks-Längsseite ist senkrecht zur Richtung x orientiert, in der sich die Spur 15 auf dem Trägersubstrat 11 erstreckt und die identisch mit der Meßrichtung x ist. Wie bei Inkrementateilungen in der Regel üblich, sind die Teilbereiche 12, 13 hinsichtlich ihrer geometrischen Abmessungen identisch ausgebildet. Durch die Breite b der Teilbereiche 12, 13 in Meßrichtung x wird letztlich die Teilungsperiode TP bestimmt, die für die Orts-Auflösung der Positionsmeßeinrichtung ausschlaggebend ist. Als Teilungsperiode TP sei hierbei die Summe der Breiten b zweier aufeinanderfolgender Teilbereiche 12, 13 definiert. Im vorliegenden Ausführungsbeispiel ist eine Teilungsperiode TP = 20µm vorgesehen.
Als geeignetes Material des Trägersubstrates 11 kann in einer vorteilhaften Ausführungsvariante etwa Silizium in Form von einkristallinem oder polykristallinem Silizium verwendet werden. Insbesondere bei ggf. erforderlichen großen Meßlängen und entsprechend ausgedehnten Trägersubstraten ist die Verwendung von polykristallinem Silizium als Substratmaterial vorzuziehen.

Im Fall der Verwendung von Silizium als Material des Trägersubstrates 11 werden die photolumineszierenden Teilbereiche 12 vorzugsweise aus porösem Silizium gebildet, das bekannte Lumineszenzeigenschaften aufweist. In Bezug auf poröses Silizium sei an dieser Stelle ergänzend auf die Veröffentlichung "The structural and luminescence properties of porous silicon" von A.G. Cullis et al. In J. Appl. Phys. 82 (3), 1.8.1997, S. 909 - 965 verwiesen. Wird poröses Silizium mit elektromagnetischer Strahlung der Wellenlänge λ₁ bestrahlt bzw. angeregt, so emittiert dieses Material elektromagnetische Strahlung im Bereich der Wellenlänge λ₂. Üblicherweise erfolgt eine Anregung mit der Wellenlänge λ₁ ≈ 370 nm, d.h. im ultravioletten Spektralbereich. Emittiert wird vom porösem Silizium dann Strahlung bzw. eine Lumineszenzbande mit einem Schwerpunkt im rot-orangen Spektralbereich, d.h.λ₂ ≈ 600 nm. Grundsätzlich gilt für die beiden Wellenlängen λ₁, λ₂: λ₁ < λ₂. Die spektrale Lage der emittierten Lumineszenzbande hängt im übrigen auch von der jeweiligen Art der Herstellung des porösen Siliziums ab und kann daher gegenüber dem genannten Bereich verschoben sein.

In einer alternativen Ausführungsform der erfindungsgemäßen Maßverkörperung kann desweiteren vorgesehen sein, in den ersten, porösen Teilbereichen 12 einen geeigneten Lumineszenz-Farbstoff, z.B. einen Rhodamin-Farbstoff, einzubringen, der eine für die Positionsmeßeinrichtung geeignete Lumineszenz-Charakteristik bzw. Lumineszenzbande aufweist. In einer derartigen Ausführungsform ist es selbstverständlich nicht erforderlich, Silizium als Material des Trägersubstrates 11 einzusetzen; es kann vielmehr auch ein alternatives Material gewählt werden, in dem entsprechend lokale Teilbereiche 12 porös ausgebildet werden können und in denen dann ein geeigneter Lumineszenz-Farbststoff eingebracht ist; hierzu eignet sich etwa auch TiO₂ oder ZrO₂.

Unter dem Begriff "porös" sei hierbei verstanden, daß in diesen Teilbereichen tief in das Material hineinreichende Poren vorhanden sind, so daß eine große innere Oberfläche in diesen Teilbereichen vorliegt. Die innere Oberfläche ist gegenüber der geometrischen Oberfläche etwa um einen Faktor 10 - 1000 vergrößert.

Auch im Fall der Verwendung eines Silizium-Trägersubstrates 11 können die porösen Silizium-Teilbereiche 12 selbstverständlich zusätzlich mit einem derartigen Lumineszenz-Farbstoff versehen werden. Dadurch kann in den Teilbereichen 12 eine nochmals verstärkte Lumineszenz erreicht werden, was wiederum eine höhere Intensität der Abtastsignale zur Folge hat.

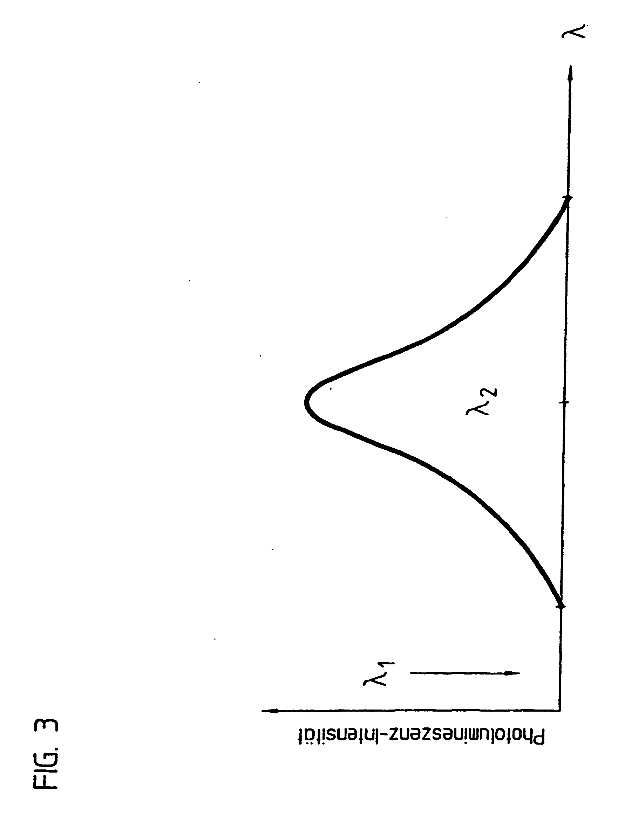

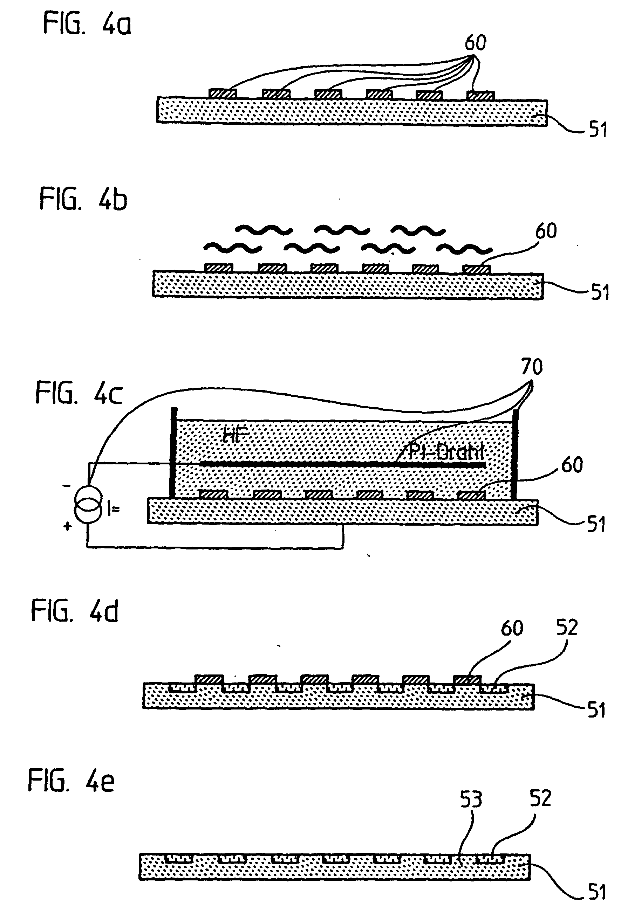

Zur Herstellung von porösem Silizium bzw. dieser Ausführungsform der erfindungsgemäßen Maßverkörperung 10 sei auf die später folgende Beschreibung der Figuren 4a - 4e verwiesen. In Bezug auf die Zusammenhänge von Anregungs- und Lumineszenz-Wellenlängen λ₁, λ₂ sei an dieser Stelle auf die Figur 3 verwiesen, in der diese für poröses Silizium graphisch veranschaulicht werden.

Wenngleich im vorliegend beschriebenen Ausführungsbeispiel stets von Photolumineszenz die Rede ist, so sei darauf hingewiesen, daß darunter lediglich die Anregung der entsprechenden Teilbereiche des Trägersubstrates durch elektromagnetische Strahlung einer ersten Wellenlänge und Erzeugung elektromagnetischer Strahlung einer zweiten Wellenlänge verstanden sei. Auch Fluoreszenz- oder vergleichbare Effekte geeigneter Materialien können daher im Rahmen der vorliegenden Erfindung genutzt werden.

Auf Seiten der Abtasteinheit 20 der erfindungsgemäßen Positionsmeßeinrichtung ist desweiteren eine Lichtquelle 21 angeordnet, die vorzusgsweise nur Strahlung mit der erforderlichen Anregungs-Wellenlänge λ₁ in Richtung der Maßverkörperung 10 emittiert. Hierbei kann es sich etwa um eine geeignete LED handeln. Möglich ist desweiteren auch die zusätzliche Anordnung einer Kollimatoroptik vor der jeweiligen Lichtquelle 21.

Ferner umfaßt die erforderliche Abtasteinheit 20 eine schematisch angedeutete Abtastplatte 22. Die Abtastplatte 22 besteht aus einem transparenten Trägersubstrat 22.1, z.B. Glas, auf dem eine Abtastteilung 22.2 in bekannter Art und Weise angeordnet ist. Im dargestellten Beispiel ist die Abtastteilung auf der Seite des Trägersubstrates 22.1 vorgesehen, die der Maßverkörperung 10 zugewandt ist. Bei der Abtastteilung 22.2 kann es sich etwa um ein übliches Amplitudengitter handeln, welches alternierend durchlässige und undurchlässige Teilbereiche 22.2u, 22.2d aufweist, die identisch zu den Teilbereichen 12, 13 auf der Maßverkörperung orientiert sind. Alternativ ist auch der Einsatz von Phasengittem etc. an dieser Stelle selbstverständlich möglich.

In der Abtasteinheit 20 ist zudem ein optoelektronisches Detektorelement 23 schematisch angedeutet, über das die bewegungsabhängig modulierten Abtastsignale erfaßt werden. Selbstverständlich können auch mehrere separate Detektorelemente an dieser Stelle eingesetzt werden; ebenso ist die Verwendung einer sog. strukturierten Detektoranordnung möglich, die eine Vielzahl identisch ausgebildeter Detektorelemente umfaßt, von denen die jeweils phasengleichen Detektorelemente ausgangsseitig zusammengeschaltet werden usw..

Im Abtaststrahlengang ist vor dem Detektorelement 23 desweiteren noch ein Filterelement 24 angeordnet, das vorzugsweise als übliches Kantenfilter ausgebildet ist. Dessen Filtereigenschaften sind so gewählt, daß damit eine Filterung der Anregungs-Wellenlänge λ₁ möglich ist, d.h. das Filterelement 24 ist für die Anregungs-Wellenlänge λ₁ undurchlässig. Dadurch wird verhindert, daß ggf. Streulicht der Wellenlänge λ₁ auf das oder die Detekorelemente fällt und damit die Signalmodulation unerwünscht beeinträchtigt.

Zur Umgehung der Streulichtproblematik kann ferner vorgesehen werden, vor der jeweiligen Lichtquelle 21 ein weiteres Filterelement 25 anzuordnen, das lediglich für Wellenlängen durchlässig ist, die deutlich kleiner als die Lumineszenz-Wellenlänge λ₂ sind, also zumindest für eine Anregungs-Wellenlänge λ₁. Dies kann etwa im Fall von Lichtquellen sinnvoll sein, die neben der Anregungs-Wellenlänge λ₁ weitere Emissionslinien aufweisen, insbesondere im Bereich der Lumineszenz-Wellenlänge λ₂. Ein entsprechendes Filterelement ist in der Figur 1 strichliniert angedeutet und mit dem Bezugszeichen 25 versehen.

Anhand von Figur 1 sollte lediglich der prinzipielle Aufbau der erfindungsgemäßen Positionsmeßeinrichtung bzw. der erfindungsgemäßen Maßverkörperung angedeutet werden; selbstverständlich existieren eine Reihe möglicher optischer Abastvarianten, die im Zusammenhang mit der vorliegenden Erfindung realisierbar sind.

Abschließend sei anhand der Figuren 4a - 4e ein mögliches Verfahren zur Herstellung einer Ausführungsform der erfindungsgemäßen Maßverkörperung erläutert, die auf einem Silizium-Trägersubstrat mit porösen, photolumineszierenden Teilbereichen beruht.

Gemäß Figur 4a wird zunächst das Sifizium-Trägersubstrat 51 in bekannter Art und Weise photolithographisch strukturiert. Es bleiben dabei nach dem Strukturierungsschritt periodisch in Meßrichtung x angeordnete Stege 60 aus Photolack auf dem Silizium-Trägersubstrat 51 stehen.

Im anschließenden Verfahrensschritt wird der Photolack bei ca. 150°C getempert, wie dies in Figur 4b angedeutet ist.

In Figur 4c ist in schematisierter Form der nächste Prozeßschritt angedeutet; es erfolgt hierbei eine elektrochemische Gleichstrom-Ätzung, um in den Teilbereichen des Silizium-Trägersubstrates 51, die nicht vom Photolack 60 bedeckt sind, das poröse Silizium auszubilden, das die erforderlichen Photolumineszenz-Eigenschaften aufweist.

Die beim Ätzprozess erzeugten Teilbereiche 52 aus porösem Silizium zwischen den verbleibenden Photolack-Stegen 60 sind in Figur 4d erkennbar.

In einem abschließenden Prozeßschritt wird schließlich der Phototack 60 auf dem Silizum-Trägersubstrat 51 entfernt, was z.B. durch Ablösen mit Hilfe von Aceton erfolgen kann. Es verbleibt die in Figur 4e dargestellte, erfindungsgemäße Maßverkörperung mit den alternierend in Meßrichtung angeordneten photolumineszierenden Teilbereichen 52 und nicht-photolumineszierenden Teilbereichen 53.

Nach diesen Prozeßschritten kann desweiteren noch vorgesehen werden, die erfindungsgemäße Maßverkörperung mit einer geeigneten, planaren Schutzschicht zu versehen; diese bewirkt sowohl einen Schutz gegenüber mechanischer Beschädigung, kann aber auch desweiteren als Entspiegelungsschicht ausgebildet werden usw..

Neben dem erläuterten Vorgehen zur Erzeugung der porösen Silizium-Teilbereiche 53 existieren auch alternative Varianten; hierzu sei lediglich auf Kapitel 11 der oben erwähnten Publikation von A.G. Cutlis et al. verwiesen.

## Patentansprüche

1. Maßverkörperung mit alternierend in mindestens einer Richtung (x) angeordneten Teilbereichen (12, 13; 52, 53) unterschiedlicher optischer Eigenschaften, bestehend aus einem Trägersubstrat (11; 51), auf dessen Oberfläche mindestens eine Spur (15) mit ersten porösen Teilbereichen (12; 52) und zweiten Teilbereichen (13; 53) angeordnet ist, wobei die ersten porösen Teilbereiche (12; 52) derart ausgebildet sind, daß dort Photolumineszenz resultiert, während die zweiten Teilbereiche (13; 53) nicht-photolumineszierend ausgebildet sind.

2. Maßverkörperung nach Anspruch 1, wobei das Trägersubstrat (11; 51) aus Silizium besteht.

3. Maßverkörperung nach Anspruch 2, wobei das Trägersubstrat (11; 51) aus einkristallinem oder polykristallinem Silizium besteht.

4. Maßverkörperung nach Anspruch 2, wobei die ersten Teilbereiche (11; 51) aus porösem, photolumineszierendem Silizium bestehen.

5. Maßverkörperung nach Anspruch 4, wobei das poröse Silizium eine Lumineszenzbande im roten oder orangen Spektralbereich aufweist.

6. Maßverkörperung nach Anspruch 1, wobei in die ersten Teilbereiche (12; 52) ein Lumineszenz-Farbstoff eingebracht ist.

7. Maßverkörperung nach Anspruch 1, wobei die ersten und zweiten Teilbereiche (12, 52; 13, 53) jeweils eine schmale Rechteckform aufweisen und die Rechtecks-Längsseite senkrecht zur Richtung der Spur (15) orientiert ist.

8. Maßverkörperung nach Anspruch 7, wobei die ersten und zweiten Teilbereiche (12, 52; 13, 53) eine Inkrementalteilung bilden.

9. Maßverkörperung nach Anspruch 1, wobei die Maßverkörperung (10) mit einer planaren Schutzschicht versehen ist.

10. Positionsmeßeinrichtung mit
- einer Maßverkörperung (10) mit alternierend angeordneten Teilbereichen (12, 13) unterschiedlicher optischer Eigenschaften, bestehend aus einem Trägersubstrat (11), auf dessen Oberfläche mindestens eine Spur (15) mit ersten porösen Teilbereichen (12) und zweiten Teilbereichen (13) angeordnet ist, wobei die ersten porösen Teilbereiche (12) derart ausgebildet sind, daß dort Photolumineszenz mit einer Photolumineszenz-Wellenlänge λ₂ resultiert, während die zweiten Teilbereiche nicht-photolumineszierend ausgebildet sind,
- einer relativ zur Maßverkörperung (10) beweglichen Abtasteinheit (20), die ein oder mehrere optoelektronische Detektorelemente (23) und eine Lichtquelle (21) umfaßt, die die Maßverkörperung (10) mit Strahlung einer definierten Wellenlänge λ₁ beaufschlagt, wobei die Strahlung der Lichtquelle (21) zur Anregung der Photolumineszenz in den ersten Teilbereichen (12) der Maßverkörperung (10) geeignet ist.

11. Positionsmeßeinrichtung nach Anspruch 10, wobei die photolumineszierenden ersten Teilbereiche (12) der Maßverkörperung (10) aus porösem Silizium bestehen.

12. Positionsmeßeinrichtung nach Anspruch 10, wobei die ersten und zweiten Teilbereiche (12, 13) der Maßverkörperung (10) eine Inkrementalteilung bilden.

13. Positionsmeßeinrichtung nach Anspruch 10, wobei die Abtasteinheit (20) desweiteren ein oder mehrere Abtastteilungen (22.2) umfaßt.

14. Positionsmeßeinrichtung nach Anspruch 10, wobei mehrere optoelektronische Detektorelemente (23) als strukturierte Detektoranordnung ausgebildet sind.

15. Positionsmeßeinrichtung nach Anspruch 10, wobei im Abtaststrahlengang vor dem mindestens einen Detektorelement (23) ein optisches Filterelement (24) angeordnet ist, das für die emittierte Wellenlänge λ₁ der lichtquelle (21) weitgehend undurchlässig und für die angeregte Photolumineszenz-Wellenlänge λ₂ durchlässig ist.

16. Positionsmeßeinrichtung nach Anspruch 15, wobei das Filterelement (24) als Kantenfilter ausgebildet ist.

17. Positionsmeßeinrichtung nach Anspruch 10, wobei der Lichtquelle (21) eine weiteres optisches Filterelement (25) vorgeordnet ist, das für die von der Lichtquelle (21) emittierte Wellenlänge λ₁ zur Anregung der Photolumineszenz durchlässig ist und für die angeregte Photolumineszenz-Wellenlänge λ₂ undurchlässig ist.

## Claims

1. Material measure with partial regions (12, 13; 52, 53), which are disposed alternately in at least one direction (x), of different optical properties, comprising a carrier substrate (11; 51), on the surface of which at least one track (15) with first porous partial regions (12; 52) and second partial regions (13; 53) is disposed, the first porous partial regions (12; 52) being configured in such a manner that photoluminescence results there, whilst the second partial regions (13; 53) have a non-photoluminescent configuration.

2. Material measure according to claim 1, the carrier substrate (11; 51) comprising silicon.

3. Material measure according to claim 2, the carrier substrate (11; 51) comprising monocrystalline or polycrystalline silicon.

4. Material measure according to claim 2, the first partial regions (11; 51) comprising porous, photoluminescent silicon.

5. Material measure according to claim 4, the porous silicon having a luminescence band in the red or orange spectral range.

6. Material measure according to claim 1, a luminescent colourant being introduced into the first partial regions (12; 52).

7. Material measure according to claim 1, the first and second partial regions (12, 52; 13, 53) having respectively a narrow rectangular form and the rectangular longitudinal side being orientated perpendicularly to the direction of the track (15).

8. Material measure according to claim 7, the first and second partial regions (12, 52; 13, 53) forming an incremental division.

9. Material measure according to claim 1, the material measure (10) being provided with a planar protective layer.

10. Position measuring device having
- a material measure (10) with partial regions (12, 13), which are disposed alternately, of different optical properties, comprising a carrier substrate (11), on the surface of which at least one track (15) with first porous partial regions (12) and second partial regions (13) is disposed, the first porous partial regions (12) being configured in such a manner that photoluminescence with a photoluminescence wavelength λ₂ results there, whilst the second partial regions have a non-photoluminescent configuration,
- a scanning unit (20) which is moveable relative to the material measure (10) and includes one or more optoelectronic detector elements (23) and a light source (21) which supplies the material measure (10) with radiation of a defined wavelength λ₁, the radiation of the light source (21) being suitable for excitation of the photoluminescence in the first partial regions (12) of the material measure (10).

11. Position measuring device according to claim 10, the photoluminescent first partial regions (12) of the material measure (10) comprising porous silicon.

12. Position measuring device according to claim 10, the first and second partial regions (12, 13) of the material measure (10) forming an incremental division.

13. Position measuring device according to claim 10, the scanning unit (20) including furthermore one or more scanning divisions (22.2).

14. Position measuring device according to claim 10, a plurality of optoelectronic detector elements (23) being configured as a structured detector arrangement.

15. Position measuring device according to claim 10, an optical filter element (24) being disposed in the scanning beam path in front of the at least one detector element (23), which optical filter element is extensively impermeable for the emitted wavelength λ₁ of the light source (21) and is permeable for the excited photoluminescence wavelength λ₂.

16. Position measuring device according to claim 15, the filter element (24) being configured as a cut-off filter.

17. Position measuring device according to claim 10, a further optical filter element (25) being disposed in front of the light source (21), which filter element is permeable for the wavelength λ₁ emitted by the light source (21) for exciting the photoluminescence and is impermeable for the excited photoluminescence wavelength λ₂.

## Revendications

1. Mesure matérialisée avec des zones partielles (12. 13 ; 52, 53) présentant des propriétés optiques différentes et disposées en alternance selon au moins une direction (x), composée d'un substrat porteur (11 ; 51) portant en surface au moins une piste (15) avec des premières zones partielles poreuses (12 ; 52) et des secondes zones partielles (13 ; 53), les premières zones partielles poreuses (12 ; 52) étant constituées de manière à produire une photoluminescence, tandis que les secondes zones partielles (13 ; 53) ne sont pas photoluminescentes.

2. Mesure matérialisée selon la revendication 1, **caractérisé en ce que** le substrat porteur (11 ; 51) est en silicium.

3. Mesure matérialisée selon la revendication 2, **caractérisé en ce que** le substrat porteur (11 ; 51) est en silicium mono ou polycristallin.

4. Mesure matérialisée selon la revendication 2, **caractérisé en ce que** les premières zones partielles (12 ; 52) sont en silicium poreux et photoluminescent.

5. Mesure matérialisée selon la revendication 4, **caractérisé en ce que** le silicium poreux présente une bande de luminescence dans la zone rouge ou orangée du spectre.

6. Mesure matérialisée selon la revendication 1, **caractérisé en ce que** dans les premières zones partielles (12 ; 52) est introduit un colorant luminescent.

7. Mesure matérialisée selon la revendication 1, **caractérisé en ce que** les premières et secondes zones partielles (12, 52 ; 13, 53) présentent chacune la forme d'un rectangle étroit dont les longs côtés sont perpendiculaires à la direction de la piste (15).

8. Mesure matérialisée selon la revendication 7, **caractérisé en ce que** les premières et secondes zones partielles (12, 52 ; 13, 53) forment une division incrémentielle.

9. Mesure matérialisée selon la revendication 1, **caractérisé en ce qu'**elle est équipée d'une zone de protection plane.

10. Dispositif de mesure de position comportant:
- une mesure matérialisée (10) avec des zones partielles (12, 13 ; 52, 53) présentant des propriétés optiques différentes et disposées en alternance, composée d'un substrat porteur (11 ; 51) portant en surface au moins une piste (15) avec des premières zones partielles poreuses (12 ; 52) et des secondes zones partielles (13 ; 53), les premières zones partielles poreuses (12 ; 52) étant constituées de manière à produire une photoluminescence de longueur d'onde λ₂, tandis que les secondes zones partielles (13 ; 53) ne sont pas photoluminescentes,
- une unité d'exploration (20) mobile par rapport à la mesure matérialisée (10) et comprenant un ou plusieurs éléments de détection (23) optoélectroniques ainsi qu'une source lumineuse (21) qui envoie sur la mesure matérialisée (10) un rayonnement présentant une longueur d'onde définie λ₁ qui est apte à exciter la photoluminescence dans les premières zones partielles (12) de la mesure matérialisée (10).

11. Dispositif de mesure de position selon la revendication 10, dans lequel les premières zones partielles (12) photoluminescentes de la mesure matérialisée (10) sont en silicium.

12. Dispositif de mesure de position selon la revendication 10, dans lequel les premières et secondes zones partielles (12 ; 13) de la mesure matérialisée (10) forment une division incrémentielle.

13. Dispositif de mesure de position selon la revendication 10, dans lequel l'unité d'exploration (20) comprend de plus une ou plusieurs divisions d'exploration (22.2).

14. Dispositif de mesure de position selon la revendication 10, dans lequel plusieurs éléments de détection (23) optoélectroniques sont disposés de manière à former un système structuré de détection.

15. Dispositif de mesure de position selon la revendication 10, dans lequel sur le circuit des rayons est disposé en amont d'au moins un élément de détection (23) un élément de filtrage optique (24) qui est largement opaque pour la longueur d'onde λ₁ émise par la source lumineuse (21), tandis qu'il est transparent pour la longueur d'onde λ₂ de photoluminescence excitée.

16. Dispositif de mesure de position selon la revendication 15, dans lequel l'élément de filtrage (24) est un filtre à arêtes.

17. Dispositif de mesure de position selon la revendication 10, dans lequel en amont de la source lumineuse (21) est monté un autre élément de filtrage optique (25) qui est transparent pour la longueur d'onde λ₁ émise par la source lumineuse (21) pour exciter la photoluminescence, tandis qu'il est opaque pour la longueur d'onde λ₂ de cette luminescence excitée.
